**Europäisches Patentamt**

**European Patent Office**

**Office européen des brevets**

(19)

(11) Publication number : **0 564 125 A2**

## (12) EUROPEAN PATENT APPLICATION

(21) Application number : **93302052.1**

(22) Date of filing : **18.03.93**

(51) Int. Cl.⁵ : **H04N 1/46**

(30) Priority : **31.03.92 IL 101436**

(43) Date of publication of application :
**06.10.93 Bulletin 93/40**

(84) Designated Contracting States :
**AT BE CH DE ES FR GB IT LI NL**

(71) Applicant : **SCITEX CORPORATION LTD.**
**7 Hamada Street**
**Herzliya 46103 (IL)**

(72) Inventor : **Melman, Haim Zvi**
**3 Hagai Street**
**Kfar Saba 44421 (IL)**

(74) Representative : **Hillier, Peter**
**Reginald W. Barker & Co., 13, Charterhouse**
**Square**
**London, EC1M 6BA (GB)**

(54) **Scanner calibration method.**

(57) A method for calibrating a first scanner to a second reference scanner. The method includes the steps of a) receiving a transmission spectrum, covering a predetermined spectral range, for each of a multiplicity of calibration color patches of a reference input medium, for each transmission spectrum, b) multiplying the transmission spectrum by each of a first plurality of color component spectra of the first scanner and each of a first plurality of color component spectra of the second reference scanner thereby to produce a second plurality of response spectra, c) integrating each of the second plurality of response spectra over the spectral range thereby to produce first and second scanner color component values and d) creating a transformation between the first scanner color component values and the second scanner color component values.

FIG. 1

Jouve, 18, rue Saint-Denis, 75001 PARIS

EP 0 564 125 A2

## FIELD OF THE INVENTION

The present invention relates generally to methods of calibration of color separation scanners and to methods of calibration not utilizing color patches in particular.

## BACKGROUND OF THE INVENTION

Color separation scanners are well known in the art and are described in detail in the book Electronic Color Separation by R.K. Molla, R.K. Printing and Publishing Company, Montgomery, West Virginia, U.S.A., 1988.

Briefly, color separation scanners include a light source for illuminating an input medium (such as a transparency or a reflective), optics for processing the light and a plurality of color separation detectors each for detecting the light of a given color separation (such as Red, Green and Blue (RGB)) arriving from the input medium. The detected light is divided into a plurality of picture elements (pixels) and a light intensity value for each color separation is stored for each pixel.

Because the spectral characteristic of the scanner is determined by the spectral characteristics of its components and because the spectral characteristic of a given component may vary over time, the color intensity values provided by a scanner upon scanning a given input medium at one time will not match those provided when scanning another time. Furthermore, since components are not reproduced exactly, a replacement component typically does not have exactly the same spectral characteristics of the component being replaced. For the same reason, two scanners of the same model typically do not have the same spectral characteristics.

Still further, the spectral response of most scanners is not identical to that of the human eye. For example, a first spot of yellow on the input medium produced with yellow ink and a second spot of yellow produced with green and red ink is seen by the human eye as being the same shade of yellow. The spectral characteristics of the scanner, however, may be such that the first spot is detected as being formed entirely of green color while the second spot is detected as being formed of some green and some red color.

For the above reasons, each scanner is calibrated against some industry standard color space, typically the XYZ color space defined by the Commission International d'Eclairage (CIE) which is a color space describing colors as the human eye sees them. The industry standard color space is typically provided with reference photographic films having on them a multiplicity of color patches of defined, CIE XYZ color values.

During calibration, the color patches are scanned by the scanner and the output from each detector recorded. For each color patch, a transformation, such as a LookUp Table (LUT) or a calibration matrix, is created between the output of the scanner and its corresponding standard color values.

The transformation is then employed with the scanner to provide the desired intensity values. A method for creating the transformation is detailed in U.S. Patent Application 07,650,468 entitled METHOD AND APPARATUS FOR COLOR PROCESSING, assigned to the assignee of the present application.

Standards for the color patches are being developed by the IT8 committee of the American National Standards Institute (ANSI). An overview of the activity of the IT8 committee is provided in the article "Landmark Developments in Device Independent Color", Dunn Report, Dunn Technologies Inc., Vol. VIII, no. 5, May 1990, pg. 1, 25 - 29. As part of its work, the IT8 committee distributed to the public the spectral responses of the color photographic materials on which the color patches are produced.

As is known in the art, the reference photographic films are expensive and a scanner operating with a variety of film types requires a reference photographic film for each film type. Furthermore, the color of the patches typically changes over time causing the resultant calibration to be incorrect. Therefore, either a new reference photographic film must be purchased for each calibration or the old film must be periodically remeasured with a colorimeter.

U.S. Patent 4,898,467 details a method for measuring the spectral response of a scanner and mentions that the spectral response can be compared to nominal spectral data for use in calibrating the scanner.

## SUMMARY OF THE INVENTION

It is an object of the present invention to provide a method for calibrating a scanner without the use of reference photographic films.

There is therefore provided, in accordance with an embodiment of the present invention, a method for calibrating a first scanner to a second reference scanner. The method includes the steps of a) receiving a transmission spectrum, covering a predetermined spectral range, for each of a multiplicity of calibration color patches of a reference input medium, for each transmission spectrum, b) multiplying the transmission spectrum by each of a first plurality of color component spectra of the first scanner and each of a first plurality of color component spectra of the second reference scanner thereby to produce a second plurality of response spectra, c) integrating each of the second plurality of response spectra over the spectral range thereby to produce first and second scanner color component values and d) creating a transformation between the first scanner color component values and the second scanner color component values.

There is further provided, in accordance with an embodiment of the present invention, a method for calibrating a scanner to a second predetermined color space. The method includes the steps of a) receiving a transmission spectrum, covering a predetermined spectral range, for each of a multiplicity of calibration color patches of a reference input medium, wherein the color patches span the gamut of the color space, b) receiving color space color component values in the color space of each of the color patches, for each transmission spectrum, c) multiplying the transmission spectrum by each of a plurality of color component spectra of the scanner to produce a plurality of response spectra, d) integrating each of the plurality of response spectra over the spectral range thereby to produce scanner color component values and e) creating a transformation between the scanner color component values and the color space color component values.

Additionally, in accordance with an embodiment of the present invention, the method includes the step of calculating the multiplicity of transmission spectra, the step of calculating occurring before the step of receiving.

Furthermore, in accordance with an embodiment of the present invention, the step of calculating includes, for each color patch, the step of linearly combining substrate and dye density data for the reference input medium wherein the percentage of the dye density data utilized corresponds with amounts of dyes present on the reference input medium which produced the color patch.

Alternatively, in accordance with an embodiment of the present invention, the step of calculating includes the steps of a) receiving substrate and dye transmission spectra for the reference input medium, b) taking the $n_i$th power of the dye transmission spectra wherein $n_i$ corresponds to amounts of dyes present on the reference input medium which produced the color patch, where i varies from 1 to the number of dyes, thereby to produce dye power transmission spectra and c) multiplying together the substrate transmission spectra and the dye power transmission spectra thereby to produce the transmission spectra of the color patch.

Additionally, in accordance with an embodiment of the present invention, the second reference scanner is the human eye.

Further, in accordance with an embodiment of the present invention, the first color component values are in red-green-blue (RGB) color space. Alternatively, the second color component values are in a color space defined by the Commission International d'Eclairage (CIE). Alternatively, the second color component values are in the CMYK color space.

Still further, in accordance with an embodiment of the present invention, the color space component values are in RGB color space.

There is also provided, in accordance with an embodiment of the present invention, a method for calculating color component values of a scanner in response to scanning a color patch. The method includes the steps of a) receiving a transmission spectrum, covering a predetermined spectral range, for a color patch, b) multiplying the transmission spectrum by a plurality of color component spectra of the scanner thereby to produce a plurality of response spectra and c) integrating each of the plurality of response spectra over the spectral range thereby to produce the color component values.

Finally, in accordance with an embodiment of the present invention, the method includes the step of measuring each of the plurality of color component spectra with a spectral analyzing device.

## BRIEF DESCRIPTION OF THE DRAWINGS AND ANNEXES

The present invention will be understood and appreciated more fully from the following detailed description taken in conjunction with the drawings in which:

Fig. 1 is a schematic illustration of a method of providing a transformation between a scanner color space and a standard color space, operative in conjunction with an embodiment of the present invention;

Fig. 2 is a block diagram illustration of apparatus for transforming color separation signals from a scanner space to a standard color space, utilizing the results of the method of Fig. 1;

Annexes A1 - A4 provide normalized film emulsion data for a plurality of different film types, where Annex A1 provides Cyan spectra, Annex A2 provides Magenta spectra, Annex A3 provides Yellow spectra and Annex A4 provides film substrate spectra;

Annex B provides film coding and Dmax (normalization) values for the film types in Annexes A1 - A4; and

Annex C provides response curves for a standard densitometer used in measuring the densities of Annex B.

## DETAILED DESCRIPTION OF PRESENT INVENTION

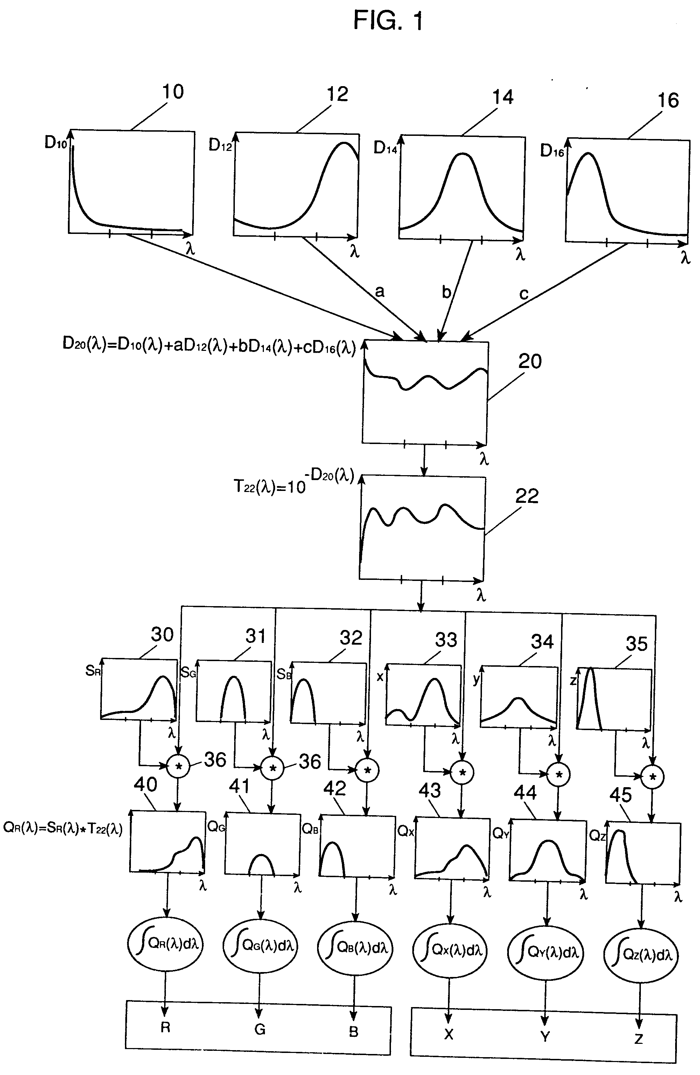

Reference is now made to Fig. 1 which illustrates a method for creating a transformation between a scanner color space and a standard color space without the use of a reference photographic film.

The method of the present invention utilizes film emulsion spectral data recently placed into the public domain by the IT8 committee mentioned hereinabove. Typical film emulsion data to be utilized includes the spectrum 10 of the film substrate, and the spectra 12, 14 and 16 of each of the dye layers Cyan, Magenta and Yellow (C,M,Y), respectively.

Example normalized film emulsion data are provided in Annexes A1 - A4 for a plurality of different film types, where Annex A1 provides Cyan spectra, Annex A2 provides Magenta spectra, Annex A3 provides Yellow spectra and Annex A4 provides film substrate spectra. Annex B provides film coding and Dmax (normalization) values for the film types in Annexes A1 - A4 and Annex C provides response curves for a standard densitometer used in measuring the densities of Annex B.

The spectra are typically provided as digital curves of density as a function of wavelength, where the spectra typically include 41 datapoints with an interval of 10 nanometers between every two consecutive datapoints.

A color patch density spectrum 20 for a given color patch is the linear combination of the four spectra 10 - 16, where the film substrate spectrum 10 is utilized as is and the percentage of amount of the respective dye to be used to produce the color patch determines the percentage of the respective dye spectrum to be added to the film substrate spectrum 10.

For example, if the color patch has percentage dye values (10,20,30), the color patch density spectrum 20 is produced by combining the film substrate spectrum as is, 10% of the cyan spectrum 12, 20% of the magenta spectrum and 30% of the yellow spectrum. The resultant density spectrum 20 is shown in Fig. 1. In mathematical terms, the resultant density spectrum 20, denoted $D_{20}$ is:

$$D_{20}(lambda) = D_{10}(lambda) + 0.1D_{12}(lambda) + 0.2D_{14}(lambda) + 0.3D_{16}(lambda) \quad (1)$$

where lambda represents the wavelengths over which the spectra are defined and where the density spectra 10 - 16 are normalized to its respective maximum density.

The color patch density spectrum 20 thus produced is then transformed into a transmission spectrum 22, such as is produced by a spectrophotometer, by applying the following function:

$$T_{22}(lambda) = 10^{-D_{20}(lambda)} \quad (2)$$

$T_{22}(lambda)$ is the resultant transmission spectrum 22.

It will be appreciated that the resultant transmission spectrum 22 can be calculated from transmission spectra $T_{10}(lambda)$ - $T_{16}(lambda)$ corresponding to the film emulsion spectra 10 - 16, as follows:

$$T_{22}(lambda) = T_{10}(lambda) * T_{12}^{0.1}(lambda) * T_{14}^{0.2}(lambda) * T_{16}^{0.3}(lambda) \quad (3)$$

The transmission spectrum 22 is then multiplied by six color component spectra 30 - 35 each of which describe the spectral response of a color channel of a color separation scanner. The spectra 30 - 35 are shown schematically.

As shown in Fig. 1, spectra 30 - 32 are the spectral response of the scanner with respect to the red, green and blue (R,G,B) channels, respectively, and spectra 33 - 35 are, for example, the CIE XYZ response of the human eye.

The multiplication operation is noted in Fig. 1 by asterisks 36 and consists of multiplying the value of the transmission spectrum 22 at a given wavelength with the corresponding value of the relevant spectrum 30 - 35.

The color component spectra 30 - 32 of the scanner can be produced either by performing the method described in U.S. Patent 4,898,467 or by performing the method described in Israel Patent Application entitled APPARATUS FOR MEASURING THE SPECTRAL RESPONSE OF A COLOR IMAGING DEVICE, filed March 25, 1992.

The spectral responses 33 - 35 of the human eye are found in the book, <u>Color</u> <u>Science:</u> <u>Concepts</u> <u>and</u> <u>Methods, Quantitative Data</u> <u>and</u> <u>Formulae</u>, 2nd Edition, by Gunter Wyszecki and W.S. Stiles, John Wiley and Sons, Inc., New York, 1982.

As noted in Fig. 1, each of the spectral outputs 40 - 45 of the multiplication operations is integrated over the wavelengths in which the data are defined, to provide the relevant color values which would be produced by the scanner or the human eye, respectively, upon viewing the color patch. The specific integration functions to be performed are noted in Fig. 1.

The integration step produces six intensity values, R, G and B from the output of the scanner response 30 - 32 and X, Y and Z values from the output of the human eye response.

One RGB and XYZ pair is produced for each color patch by performing the above described method on different dye combinations. The RGB and XYZ pairs are then utilized to establish a transformation from the RGB of the scanner to CIE XYZ, for the particular set of dyes (i.e. film type) represented by the film emulsion spectra 10 - 16.

One method of constructing and utilizing the above mentioned transformation is described in U.S. Patent Application 07/650,468 to the common Assignees of the present invention, incorporated herein by reference.

It will be appreciated that, in accordance with the present invention, the transformation from scanner RGB to CIE XYZ is produced without utilizing a reference film and without measuring the transmission spectrum 22.

It will further be appreciated that, if the transmission spectrum 22 is available, typically by measuring each patch once with a spectrometer, the steps of forming the transmission spectrum 22 in the method outlined hereinabove are not necessary. The transmission spectrum 22 typically is 40 - 200 bytes and typically 250 of them need to be stored in order to represent a typical reference film. In contrast, the method as outlined in full hereinabove requires only four film spectra 10 - 16 to be stored.

It is still further appreciated that the calculations utilizing the XYZ spectral responses 33 - 35 are not necessary if, for a given color patch, the XYZ values are already known. In this case, the pairs used for the transformation are the RGB values calculated and the XYZ values already known.

In accordance with the present invention, spectra 33 - 35 can be any spectra which, upon multiplication by the transmission spectrum 22 and integration thereof, produce color component values in any desired color space. The resultant transformation is between the scanner color component values and the color space color component values.

Alternatively, as described hereinabove, the color space color component values need not be calculated if they are otherwise available.

If it is desired to be able to have a first scanner produce output similar to a second scanner, the spectral response of both scanners can be utilized for spectra 30 - 35. The method is then performed as described hereinabove to produce first RGB and second RGB pairs. A means for transformation is produced from the resultant pairs for transforming the first RGB values to the second RGB values thereby to enable the first scanner to behave similarly to the second scanner.

The method of constructing a transformation between two scanners might be utilized when an electro-optical part is replaced in an original scanner. Due to the new part, the repaired scanner (the "first scanner") will not necessarily have the same spectral response as the original scanner (the "second scanner"). Therefore, in order to produce matching output, the repaired scanner must be recalibrated to resemble the original scanner. The present invention described hereinabove provides a method for so doing without having to use reference films.

It will be appreciated that the transformation described hereinabove can be incorporated with any other transformation which the scanner may utilize. Thus, for scanners which typically utilize a LUT to transform scanner RGB values to printer CMYK values, the LUT can be designed to transform directly from the RGB values of the first scanner (the repaired scanner) to the CMYK values such that the first and second scanners produce the same CMYK values for a given input image.

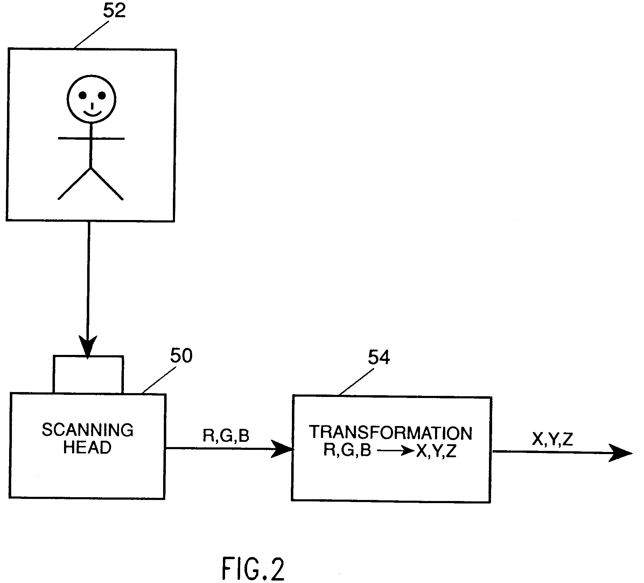

Reference is now made to Fig. 2 which illustrates apparatus for utilizing the transformation produced by the method of Fig. 1.

The apparatus typically comprises a scanning head 50 scanning an input image 52 to produce a digital representation of the input image. The values produced by the scanner are RGB values.

The RGB values are provided to a means for transformation 54, produced by the method of Fig. 1, thereby to produce XYZ values.

It will be appreciated that the XYZ values may be transformed to any other CIE color space such as L∗a∗b∗, thereby to provide a transformation from the RGB color space of the scanner to the selected color space. The XYZ, RGB, L∗a∗b∗ and CMYK color spaces are provided herein as examples only and are not intended to limit the scope of the present invention.

It will be appreciated by persons skilled in the art that the present invention is not limited to what has been particularly shown and described hereinabove. Rather the scope of the present invention is defined only by the claims which follow:

CYAN NORMALIZED SPECTRAL DENSITIES.

| | FUJI100 | FUJI64 | AGFA | KONICA | BXTA64 | BXTA100 | XODA64 |
|---|---|---|---|---|---|---|---|
| 380 | 0.7638 | 0.2527 | 0.2100 | 0.2900 | 0.2700 | 0.2700 | 0.2900 |
| 390 | 0.1745 | 0.1704 | 0.1800 | 0.2280 | 0.2000 | 0.2000 | 0.2200 |
| 400 | 0.1449 | 0.1427 | 0.1400 | 0.1850 | 0.1674 | 0.1600 | 0.1825 |
| 410 | 0.1097 | 0.1100 | 0.1000 | 0.1550 | 0.1266 | 0.1192 | 0.1509 |
| 420 | 0.0905 | 0.0806 | 0.0800 | 0.1250 | 0.0941 | 0.0913 | 0.1184 |
| 430 | 0.0641 | 0.0630 | 0.0600 | 0.1050 | 0.0711 | 0.0720 | 0.0852 |
| 440 | 0.0504 | 0.0487 | 0.0500 | 0.0900 | 0.0565 | 0.0591 | 0.0552 |
| 450 | 0.0384 | 0.0386 | 0.0400 | 0.0780 | 0.0450 | 0.0483 | 0.0365 |
| 460 | 0.0312 | 0.0327 | 0.0400 | 0.0700 | 0.0387 | 0.0408 | 0.0243 |
| 470 | 0.0304 | 0.0218 | 0.0400 | 0.0660 | 0.0366 | 0.0376 | 0.0162 |
| 480 | 0.0296 | 0.0336 | 0.0400 | 0.0670 | 0.0387 | 0.0387 | 0.0114 |
| 490 | 0.0368 | 0.0386 | 0.0400 | 0.0730 | 0.0429 | 0.0419 | 0.0114 |
| 500 | 0.0464 | 0.0462 | 0.0500 | 0.0800 | 0.0513 | 0.0473 | 0.0130 |
| 510 | 0.0600 | 0.0588 | 0.0600 | 0.0950 | 0.0659 | 0.0612 | 0.0138 |
| 520 | 0.0793 | 0.0789 | 0.0800 | 0.1120 | 0.0879 | 0.0836 | 0.0162 |
| 530 | 0.1065 | 0.1041 | 0.1000 | 0.1360 | 0.1161 | 0.1074 | 0.0235 |
| 540 | 0.1409 | 0.1385 | 0.1300 | 0.1630 | 0.1527 | 0.1461 | 0.0357 |
| 550 | 0.1865 | 0.1847 | 0.1800 | 0.2050 | 0.1967 | 0.1912 | 0.0627 |
| 560 | 0.2482 | 0.2401 | 0.2300 | 0.2550 | 0.2500 | 0.2481 | 0.0795 |
| 570 | 0.3058 | 0.3031 | 0.2900 | 0.3200 | 0.3222 | 0.3179 | 0.1144 |
| 580 | 0.3843 | 0.3820 | 0.3700 | 0.3900 | 0.4069 | 0.4135 | 0.1703 |
| 590 | 0.4796 | 0.4778 | 0.4500 | 0.4800 | 0.5084 | 0.5177 | 0.2612 |
| 600 | 0.5845 | 0.5819 | 0.5500 | 0.5680 | 0.6151 | 0.6273 | 0.3852 |
| 610 | 0.6894 | 0.6885 | 0.6600 | 0.6730 | 0.7207 | 0.7336 | 0.5645 |
| 620 | 0.7894 | 0.7893 | 0.7600 | 0.7750 | 0.8180 | 0.8357 | 0.7486 |
| 630 | 0.8751 | 0.9001 | 0.8500 | 0.8750 | 0.8964 | 0.9119 | 0.9019 |
| 640 | 0.9408 | 0.9404 | 0.9200 | 0.9450 | 0.9550 | 0.9624 | 1.0000 |
| 650 | 0.9840 | 0.9832 | 0.9800 | 0.9850 | 0.9895 | 0.9946 | 0.9927 |
| 660 | 1.0000 | 1.0000 | 1.0000 | 1.0000 | 1.0000 | 1.0000 | 0.9278 |
| 670 | 0.9896 | 0.9882 | 0.9900 | 0.9990 | 0.9801 | 0.9742 | 0.8110 |
| 680 | 0.9496 | 0.9479 | 0.9600 | 0.9530 | 0.9351 | 0.9259 | 0.7105 |
| 690 | 0.8839 | 0.8825 | 0.8900 | 0.8900 | 0.8703 | 0.8647 | 0.6099 |
| 700 | 0.7958 | 0.8102 | 0.8100 | 0.8100 | 0.7856 | 0.7798 | 0.6093 |
| 710 | 0.6958 | 0.8944 | 0.7100 | 0.7150 | 0.6900 | 0.6800 | 0.4000 |
| 720 | 0.5909 | 0.8903 | 0.6200 | 0.6050 | 0.5900 | 0.5800 | 0.3000 |
| 730 | 0.4868 | 0.4836 | 0.0000 | 0.4920 | 0.0000 | 0.0000 | 0.0000 |
| 740 | 0.3876 | 0.3871 | 0.0000 | 0.3880 | 0.0000 | 0.0000 | 0.0000 |
| 750 | 0.3026 | 0.3023 | 0.0000 | 0.2850 | 0.0000 | 0.0000 | 0.0000 |
| 760 | 0.2306 | 0.2309 | 0.0000 | 0.2100 | 0.0000 | 0.0000 | 0.0000 |
| 770 | 0.1737 | 0.1738 | 0.0000 | 0.1660 | 0.0000 | 0.0000 | 0.0000 |
| 780 | 0.1273 | 0.1278 | 0.0000 | 0.1080 | 0.0000 | 0.0000 | 0.0000 |

# ANNEX A1

## MAGENTA NORMALIZED SPECTRAL DENSITIES

| | FUJI100 | FUJI64 | AGFA | KONICA | BKTA64 | BKTA100 | KODA64 |
|---|---|---|---|---|---|---|---|
| 380 | 0.5249 | 0.2588 | 0.0606 | 0.1500 | 0.0600 | 0.0600 | 0.4200 |
| 390 | 0.0643 | 0.0610 | 0.0606 | 0.1430 | 0.0600 | 0.0600 | 0.3900 |
| 400 | 0.0820 | 0.0810 | 0.0808 | 0.1420 | 0.0812 | 0.0720 | 0.3653 |
| 410 | 0.1069 | 0.1016 | 0.1010 | 0.1470 | 0.1067 | 0.0925 | 0.3359 |
| 420 | 0.1302 | 0.1212 | 0.1212 | 0.1650 | 0.1253 | 0.1129 | 0.3046 |
| 430 | 0.1608 | 0.1522 | 0.1515 | 0.1820 | 0.1427 | 0.1430 | 0.2657 |
| 440 | 0.1688 | 0.1574 | 0.1414 | 0.1780 | 0.1566 | 0.1505 | 0.2334 |
| 450 | 0.1668 | 0.1470 | 0.1414 | 0.1700 | 0.1531 | 0.1387 | 0.2182 |
| 460 | 0.1762 | 0.1634 | 0.1616 | 0.1850 | 0.1578 | 0.1505 | 0.2277 |
| 470 | 0.2235 | 0.2115 | 0.2121 | 0.2280 | 0.1984 | 0.1968 | 0.2808 |
| 480 | 0.2990 | 0.2889 | 0.2929 | 0.2850 | 0.2645 | 0.2677 | 0.3672 |
| 490 | 0.4043 | 0.3912 | 0.4040 | 0.3700 | 0.3561 | 0.3656 | 0.4896 |
| 500 | 0.5370 | 0.5219 | 0.5354 | 0.4750 | 0.4698 | 0.4882 | 0.6281 |
| 510 | 0.6841 | 0.6672 | 0.6869 | 0.6250 | 0.6148 | 0.6323 | 0.7704 |
| 520 | 0.8312 | 0.8186 | 0.8283 | 0.7750 | 0.7599 | 0.7785 | 0.8928 |
| 530 | 0.9421 | 0.9329 | 0.9495 | 0.8950 | 0.8840 | 0.9011 | 0.9696 |
| 540 | 1.0000 | 0.9966 | 1.0000 | 0.9750 | 0.9710 | 0.9785 | 1.0000 |
| 550 | 0.9984 | 1.0000 | 1.0000 | 1.0000 | 1.0000 | 1.0000 | 0.9696 |
| 560 | 0.9469 | 0.9716 | 0.9192 | 0.9800 | 0.9722 | 0.9645 | 0.8928 |
| 570 | 0.8296 | 0.8366 | 0.7980 | 0.8800 | 0.8712 | 0.8710 | 0.7676 |
| 580 | 0.6809 | 0.6844 | 0.6364 | 0.7100 | 0.7274 | 0.7204 | 0.6224 |
| 590 | 0.5088 | 0.5082 | 0.4646 | 0.5100 | 0.5534 | 0.5430 | 0.4839 |
| 600 | 0.3553 | 0.3500 | 0.3333 | 0.3560 | 0.3828 | 0.3849 | 0.3596 |
| 610 | 0.2404 | 0.2322 | 0.2323 | 0.2400 | 0.2610 | 0.2634 | 0.2657 |
| 620 | 0.1608 | 0.1505 | 0.1515 | 0.1550 | 0.1694 | 0.1720 | 0.1935 |
| 630 | 0.1117 | 0.0989 | 0.1010 | 0.1050 | 0.1114 | 0.1161 | 0.1433 |
| 640 | 0.0804 | 0.0636 | 0.0707 | 0.0750 | 0.0754 | 0.0785 | 0.1091 |
| 650 | 0.0595 | 0.0413 | 0.0505 | 0.0550 | 0.0487 | 0.0516 | 0.0816 |
| 660 | 0.0450 | 0.0258 | 0.0404 | 0.0430 | 0.0325 | 0.0333 | 0.0626 |
| 670 | 0.0354 | 0.0163 | 0.0303 | 0.0350 | 0.0232 | 0.0204 | 0.0484 |
| 680 | 0.0289 | 0.0103 | 0.0202 | 0.0300 | 0.0186 | 0.0161 | 0.0427 |
| 690 | 0.0225 | 0.0069 | 0.0202 | 0.0280 | 0.0128 | 0.0086 | 0.0380 |
| 700 | 0.0185 | 0.0043 | 0.0101 | 0.0230 | 0.0081 | 0.0043 | 0.0332 |
| 710 | 0.0153 | 0.0034 | 0.0101 | 0.0200 | 0.0080 | 0.0043 | 0.0280 |
| 720 | 0.0121 | 0.0026 | 0.0101 | 0.0170 | 0.0080 | 0.0043 | 0.0230 |
| 730 | 0.0105 | 0.0026 | 0.0000 | 0.0160 | 0.0000 | 0.0000 | 0.0000 |
| 740 | 0.0072 | 0.0026 | 0.0000 | 0.0120 | 0.0000 | 0.0000 | 0.0000 |
| 750 | 0.0072 | 0.0034 | 0.0000 | 0.0110 | 0.0000 | 0.0000 | 0.0000 |
| 760 | 0.0064 | 0.0043 | 0.0000 | 0.0100 | 0.0000 | 0.0000 | 0.0000 |
| 770 | 0.0048 | 0.0043 | 0.0000 | 0.0090 | 0.0000 | 0.0000 | 0.0000 |
| 780 | 0.0048 | 0.0043 | 0.0000 | 0.0080 | 0.0000 | 0.0000 | 0.0000 |

## ANNEX A2

## MAGENTA NORMALIZED SPECTRAL DENSITIES

|      | FUJI100 | FUJI64 | AGFA   | KONICA | BKTA64 | BKTA100 | KODA64 |
|------|---------|--------|--------|--------|--------|---------|--------|
| 380  | 0.7618  | 0.5416 | 0.3434 | 0.2906 | 0.4700 | 0.3000  | 0.3800 |
| 390  | 0.3909  | 0.3951 | 0.4040 | 0.3758 | 0.5700 | 0.3900  | 0.4800 |
| 400  | 0.5177  | 0.5199 | 0.4949 | 0.4760 | 0.6781 | 0.4898  | 0.6831 |
| 410  | 0.6627  | 0.6682 | 0.6263 | 0.6112 | 0.7777 | 0.6588  | 0.7247 |
| 420  | 0.8109  | 0.8128 | 0.7778 | 0.7766 | 0.8540 | 0.7989  | 0.8403 |
| 430  | 0.9267  | 0.9268 | 0.9192 | 0.8968 | 0.9325 | 0.9198  | 0.9403 |
| 440  | 0.9937  | 0.9891 | 1.0000 | 0.9820 | 0.9900 | 0.9882  | 1.0000 |
| 450  | 1.0000  | 1.0000 | 1.0000 | 1.0000 | 1.0000 | 1.0000  | 0.9948 |
| 460  | 0.9377  | 0.9394 | 0.9394 | 0.9569 | 0.9635 | 0.9380  | 0.9338 |
| 470  | 0.8069  | 0.8092 | 0.7778 | 0.8517 | 0.8650 | 0.8021  | 0.8026 |
| 480  | 0.6391  | 0.6447 | 0.5859 | 0.6513 | 0.7323 | 0.6396  | 0.6390 |
| 490  | 0.4760  | 0.4756 | 0.4040 | 0.4760 | 0.5819 | 0.4769  | 0.4714 |
| 500  | 0.3302  | 0.3237 | 0.2727 | 0.3156 | 0.4281 | 0.3294  | 0.3143 |
| 510  | 0.2206  | 0.2080 | 0.1818 | 0.2154 | 0.2931 | 0.2096  | 0.1974 |
| 520  | 0.1442  | 0.1239 | 0.1111 | 0.1403 | 0.1814 | 0.1198  | 0.1130 |
| 530  | 0.0977  | 0.0714 | 0.0707 | 0.0922 | 0.1095 | 0.0674  | 0.0714 |
| 540  | 0.0693  | 0.0407 | 0.0404 | 0.0651 | 0.0642 | 0.0342  | 0.0606 |
| 550  | 0.0528  | 0.0226 | 0.0303 | 0.0501 | 0.0409 | 0.0171  | 0.0325 |
| 560  | 0.0504  | 0.0163 | 0.0202 | 0.0401 | 0.0310 | 0.0096  | 0.0182 |
| 570  | 0.0339  | 0.0099 | 0.0101 | 0.0331 | 0.0243 | 0.0011  | 0.0078 |
| 580  | 0.0268  | 0.0072 | 0.0101 | 0.0281 | 0.0221 | 0.0011  | 0.0000 |
| 590  | 0.0189  | 0.0054 | 0.0101 | 0.0220 | 0.0221 | 0.0011  | 0.0000 |
| 600  | 0.0142  | 0.0045 | 0.0000 | 0.0200 | 0.0232 | 0.0000  | 0.0013 |
| 610  | 0.0118  | 0.0036 | 0.0000 | 0.0170 | 0.0288 | 0.0021  | 0.0039 |
| 620  | 0.0087  | 0.0027 | 0.0000 | 0.0160 | 0.0354 | 0.0032  | 0.0039 |
| 630  | 0.0079  | 0.0027 | 0.0000 | 0.0130 | 0.0409 | 0.0000  | 0.0039 |
| 640  | 0.0071  | 0.0027 | 0.0000 | 0.0110 | 0.0476 | 0.0032  | 0.0026 |
| 650  | 0.0071  | 0.0009 | 0.0000 | 0.0080 | 0.0620 | 0.0032  | 0.0052 |
| 660  | 0.0063  | 0.0009 | 0.0000 | 0.0070 | 0.0553 | 0.0053  | 0.0065 |
| 670  | 0.0055  | 0.0009 | 0.0000 | 0.0050 | 0.0564 | 0.0032  | 0.0104 |
| 680  | 0.0047  | 0.0000 | 0.0000 | 0.0050 | 0.0664 | 0.0032  | 0.0117 |
| 690  | 0.0047  | 0.0000 | 0.0000 | 0.0030 | 0.0553 | 0.0043  | 0.0143 |
| 700  | 0.0047  | 0.0000 | 0.0000 | 0.0030 | 0.0509 | 0.0043  | 0.0143 |
| 710  | 0.0039  | 0.0000 | 0.0000 | 0.0020 | 0.0450 | 0.0140  | 0.0140 |
| 720  | 0.0039  | 0.0000 | 0.0000 | 0.0020 | 0.0400 | 0.0140  | 0.0140 |
| 730  | 0.0024  | 0.0000 | 0.0000 | 0.0000 | 0.0000 | 0.0000  | 0.0000 |
| 740  | 0.0016  | 0.0000 | 0.0000 | 0.0000 | 0.0000 | 0.0000  | 0.0000 |
| 750  | 0.0024  | 0.0000 | 0.0000 | 0.0000 | 0.0000 | 0.0000  | 0.0000 |
| 760  | 0.0024  | 0.0000 | 0.0000 | 0.0000 | 0.0000 | 0.0000  | 0.0000 |
| 770  | 0.0032  | 0.0009 | 0.0000 | 0.0000 | 0.0000 | 0.0000  | 0.0000 |
| 780  | 0.0024  | 0.0009 | 0.0000 | 0.0000 | 0.0000 | 0.0000  | 0.0000 |

# ANNEX A3

## MAGENTA NORMALIZED SPECTRAL DENSITIES

| | FUJI100 | FUJI64 | AGFA | KONICA | BKTA64 | BKTA100 | KODA64 |
|---|---|---|---|---|---|---|---|
| 380 | 3.0460 | 3.0000 | 1.5030 | 2.0000 | 2.5720 | 2.5000 | 0.9266 |
| 390 | 1.7330 | 1.8800 | 0.8330 | 1.0706 | 2.3570 | 2.0000 | 0.9450 |
| 400 | 0.6140 | 0.5080 | 0.3730 | 0.6799 | 1.1820 | 1.0900 | 0.6846 |
| 410 | 0.2020 | 0.2060 | 0.2200 | 0.3036 | 0.4607 | 0.3200 | 0.3679 |
| 420 | 0.1570 | 0.1640 | 0.1820 | 0.1713 | 0.2439 | 0.1600 | 0.2421 |
| 430 | 0.1550 | 0.1610 | 0.1710 | 0.1409 | 0.1957 | 0.1300 | 0.2100 |
| 440 | 0.1440 | 0.1520 | 0.1640 | 0.1319 | 0.1789 | 0.1200 | 0.1957 |
| 450 | 0.1310 | 0.1370 | 0.1890 | 0.1278 | 0.1695 | 0.1200 | 0.1830 |
| 460 | 0.1250 | 0.1310 | 0.1860 | 0.1249 | 0.1614 | 0.1100 | 0.1710 |
| 470 | 0.1210 | 0.1260 | 0.1540 | 0.1226 | 0.1546 | 0.1100 | 0.1602 |
| 480 | 0.1190 | 0.1190 | 0.1580 | 0.1238 | 0.1481 | 0.1100 | 0.1518 |
| 490 | 0.1130 | 0.1140 | 0.1590 | 0.1273 | 0.1429 | 0.1100 | 0.1466 |
| 500 | 0.1130 | 0.1130 | 0.1630 | 0.1290 | 0.1442 | 0.1200 | 0.1449 |
| 510 | 0.1160 | 0.1140 | 0.1740 | 0.1355 | 0.1451 | 0.1200 | 0.1468 |
| 520 | 0.1220 | 0.1170 | 0.1660 | 0.1409 | 0.1365 | 0.1200 | 0.1518 |
| 530 | 0.1290 | 0.1230 | 0.1620 | 0.1337 | 0.1350 | 0.1200 | 0.1578 |
| 540 | 0.1390 | 0.1300 | 0.1600 | 0.1209 | 0.1429 | 0.1300 | 0.1620 |
| 550 | 0.1520 | 0.1410 | 0.1630 | 0.1186 | 0.1559 | 0.1400 | 0.1637 |
| 560 | 0.1550 | 0.1520 | 0.1600 | 0.1215 | 0.1693 | 0.1400 | 0.1634 |
| 570 | 0.1650 | 0.1540 | 0.1620 | 0.1232 | 0.1755 | 0.1400 | 0.1624 |
| 580 | 0.1490 | 0.1410 | 0.1670 | 0.1186 | 0.1737 | 0.1400 | 0.1650 |
| 590 | 0.1220 | 0.1170 | 0.1440 | 0.1129 | 0.1650 | 0.1200 | 0.1659 |
| 600 | 0.1090 | 0.1060 | 0.1340 | 0.1085 | 0.1653 | 0.1100 | 0.1625 |
| 610 | 0.1080 | 0.1060 | 0.1310 | 0.1073 | 0.1654 | 0.1100 | 0.1625 |
| 620 | 0.1130 | 0.1100 | 0.1300 | 0.1068 | 0.1657 | 0.1100 | 0.1650 |
| 630 | 0.1170 | 0.1140 | 0.1290 | 0.1062 | 0.1658 | 0.1000 | 0.1675 |
| 640 | 0.1230 | 0.1200 | 0.1290 | 0.1051 | 0.1700 | 0.1000 | 0.1682 |
| 650 | 0.1290 | 0.1260 | 0.1260 | 0.1046 | 0.1650 | 0.1000 | 0.1678 |
| 660 | 0.1340 | 0.1310 | 0.1240 | 0.1029 | 0.1580 | 0.1000 | 0.1610 |
| 670 | 0.1380 | 0.1320 | 0.1190 | 0.1013 | 0.1600 | 0.0900 | 0.1560 |
| 680 | 0.1360 | 0.1320 | 0.1170 | 0.0980 | 0.1430 | 0.0900 | 0.1490 |
| 690 | 0.1340 | 0.1290 | 0.1120 | 0.0942 | 0.1360 | 0.0900 | 0.1420 |
| 700 | 0.1300 | 0.1250 | 0.1080 | 0.0904 | 0.1290 | 0.0900 | 0.1325 |
| 710 | 0.1250 | 0.1190 | 0.1040 | 0.0900 | 0.1220 | 0.0800 | 0.1219 |
| 720 | 0.1180 | 0.1130 | 0.0990 | 0.0900 | 0.1160 | 0.0800 | 0.1139 |
| 730 | 0.1100 | 0.1070 | 0.0940 | 0.0900 | 0.1080 | 0.0800 | 0.1058 |
| 740 | 0.1040 | 0.1000 | 0.0910 | 0.0900 | 0.1010 | 0.0800 | 0.0998 |
| 750 | 0.0930 | 0.0900 | 0.0880 | 0.0900 | 0.0000 | 0.0700 | 0.0000 |
| 760 | 0.0860 | 0.0830 | 0.0850 | 0.0900 | 0.0000 | 0.0700 | 0.0000 |
| 770 | 0.0780 | 0.0760 | 0.0830 | 0.0900 | 0.0000 | 0.0000 | 0.0000 |
| 780 | 0.0720 | 0.0710 | 0.0790 | 0.0900 | 0.0000 | 0.0000 | 0.0000 |

# ANNEX A4

# FILM CODING AND DMAX VALUES

THE FILM CODING AND DMAX VALUES USED ARE AS FOLLOWS.
NOTE THAT THE DMAX VALUES ARE BASED
ON STATUS A DENSITOMETRY.

| FILM NUMBER | FILM NAME | R MAX | G MAX | B MAX |
|---|---|---|---|---|
| 1 | FUJI 100 | 2.98 | 3.30 | 3.54 |
| 2 | FUJI 64 | 3.09 | 3.15 | 3.61 |
| 3 | AGFA | 3.14 | 3.37 | 3.17 |
| 4 | KONICA | 3.18 | 3.18 | 3.10 |
| 5 | EKTA 64 | 3.22 | 3.24 | 3.80 |
| 6 | EKTA 100 | 3.41 | 3.48 | 3.73 |
| 7 | KODA 64 | 3.84 | 3.53 | 3.32 |

# ANNEX B

## STATUS A RESPONSE FUNCTIONS

|  | RED | GREEN | BLUE |
|---|---|---|---|
| 380 | 0.0000 | 0.0000 | 0.0000 |
| 390 | 0.0000 | 0.0000 | 0.0000 |
| 400 | 0.0000 | 0.0000 | 0.0000 |
| 410 | 0.0000 | 0.0000 | 0.0000 |
| 420 | 0.0000 | 0.0000 | 0.0131 |
| 430 | 0.0000 | 0.0000 | 0.2159 |
| 440 | 0.0000 | 0.0000 | 0.3277 |
| 450 | 0.0000 | 0.0000 | 0.2675 |
| 460 | 0.0000 | 0.0000 | 0.1365 |
| 470 | 0.0000 | 0.0000 | 0.0359 |
| 480 | 0.0000 | 0.0000 | 0.0032 |
| 490 | 0.0000 | 0.0000 | 0.0001 |
| 500 | 0.0000 | 0.0001 | 0.0000 |
| 510 | 0.0000 | 0.0212 | 0.0000 |
| 520 | 0.0000 | 0.1933 | 0.0000 |
| 530 | 0.0000 | 0.3194 | 0.0000 |
| 540 | 0.0000 | 0.2572 | 0.0000 |
| 550 | 0.0000 | 0.1407 | 0.0000 |
| 560 | 0.0000 | 0.0531 | 0.0000 |
| 570 | 0.0000 | 0.0130 | 0.0000 |
| 580 | 0.0000 | 0.0019 | 0.0000 |
| 590 | 0.0000 | 0.0001 | 0.0000 |
| 600 | 0.0013 | 0.0000 | 0.0000 |
| 610 | 0.1490 | 0.0000 | 0.0000 |
| 620 | 0.3430 | 0.0000 | 0.0000 |
| 630 | 0.2548 | 0.0000 | 0.0000 |
| 640 | 0.1378 | 0.0000 | 0.0000 |
| 650 | 0.0662 | 0.0000 | 0.0000 |
| 660 | 0.0272 | 0.0000 | 0.0000 |
| 670 | 0.0122 | 0.0000 | 0.0000 |
| 680 | 0.0050 | 0.0000 | 0.0000 |
| 690 | 0.0020 | 0.0000 | 0.0000 |
| 700 | 0.0008 | 0.0000 | 0.0000 |
| 710 | 0.0003 | 0.0000 | 0.0000 |
| 720 | 0.0001 | 0.0000 | 0.0000 |

# ANNEX C

## Claims

1. A method for calibrating a first scanner to a second reference scanner, the method comprising the steps of:

   receiving a transmission spectrum, covering a predetermined spectral range, for each of a multiplicity of calibration color patches of a reference input medium;

   for each transmission spectrum,

   multiplying said transmission spectrum by each of a first plurality of color component spectra of said first scanner and each of a first plurality of color component spectra of said second reference scanner thereby to produce a second plurality of response spectra;

   integrating each of said second plurality of response spectra over said spectral range thereby to produce first and second scanner color component values; and

   creating a transformation between said first scanner color component values and said second scanner color component values.

2. A method for calibrating a scanner to a second predetermined color space, the method comprising the steps of:

   receiving a transmission spectrum, covering a predetermined spectral range, for each of a multiplicity of calibration color patches of a reference input medium, wherein said color patches span the gamut of said color space;

   receiving color space color component values in said color space of each of said color patches;

   for each transmission spectrum,

   multiplying said transmission spectrum by each of a plurality of color component spectra of said scanner to produce a plurality of response spectra;

   integrating each of said plurality of response spectra over said spectral range thereby to produce scanner color component values; and

   creating a transformation between said scanner color component values and said color space color component values.

3. A method according to either of claims 1 or 2 and also including the step of calculating said multiplicity of transmission spectra, said step of calculating occurring before said step of receiving.

4. A method according to claim 3 and wherein said step of calculating includes, for each color patch, the step of linearly combining substrate and dye density data for said reference input medium wherein the percentage of the dye density data utilized corresponds with amounts of dyes present on said reference input medium which produced said color patch.

5. A method according to claim 3 and wherein said step of calculating includes the steps of:

   receiving substrate and dye transmission spectra for said reference input medium,

   taking the $n_i$th power of said dye transmission spectra wherein $n_i$ corresponds to amounts of dyes present on said reference input medium which produced said color patch, where i varies from 1 to the number of dyes, thereby to produce dye power transmission spectra; and

   multiplying together said substrate transmission spectra and said dye power transmission spectra thereby to produce said transmission spectra of said color patch.

6. A method according to any claims 1, 3 - 5 and wherein said second reference scanner is the human eye.

7. A method according to any of the previous claims and wherein said first color component values are in red-green-blue (RGB) color space.

8. A method according to claim 6 and wherein said second color component values are in a color space defined by the Commission International d'Eclairage (CIE).

9. A method according to any of claims 2 - 7 and wherein said color space component values are in RGB color space.

10. A method according to any of claims 2 - 7 and wherein said second color component values are in CMYK color space.

11. A method for calculating color component values of a scanner in response to scanning a color patch, the method comprising the steps of:

receiving a transmission spectrum, covering a predetermined spectral range, for a color patch;

multiplying said transmission spectrum by a plurality of color component spectra of said scanner thereby to produce a plurality of response spectra; and

integrating each of said plurality of response spectra over said spectral range thereby to produce said color component values.

12. A method according to any of the previous claims and including the step of measuring each of said plurality of color component spectra with a spectral analyzing device.

FIG. 1

EP 0 564 125 A2

14

FIG.2